# EUROPEAN PATENT APPLICATION

(11) **EP 4 671 020 A1**
(43) Date of publication of application: **31.12.2025**
(21) Application number: 25183839.7
(22) Date of filing: 18.06.2025
(51) Int. Cl.: B60K 6/387, B60K 6/40, B60K 6/48

(54) **HYBRID ELECTRIC VEHICLE**

(30) Priority: 27.06.2024 JP 2024104089
(71) Applicant: TOYOTA JIDOSHA KABUSHIKI KAISHA, Toyota-shi, Aichi-ken 471-8571 (JP)
(72) Inventor: KUGIMACHI, Yuta, TOYOTA-SHI, AICHI-KEN, 471-8571 (JP); KAMISHIMA, Hirofumi, TOYOTA-SHI, AICHI-KEN, 471-8571 (JP)
(74) Representative: Cabinet Beau de Loménie

(57) **Abstract**

A hybrid electric vehicle includes an engine, a transaxle, a propeller shaft, and a compressor. The engine is disposed forward of a driver's seat and a passenger seat. The transaxle is disposed rearward of the driver's seat and the passenger seat. The propeller shaft extends between the driver's seat and the passenger seat to connect the engine to the transaxle. The compressor is adjacent to the transaxle.

## Description

### CROSS-REFERENCE TO RELATED APPLICATIONS

This application is based upon and claims the benefit of priority from Japanese Patent Application No. 2024-104089, filed on June 27, 2024, the entire contents of which are incorporated herein by reference.

### BACKGROUND

### 1. Field

The present disclosure relates to a hybrid electric vehicle.

### 2. Description of Related Art

Japanese Laid-Open Patent Publication No. 2008-155829 discloses a hybrid electric vehicle. The hybrid electric vehicle is a sports car.

Sports car type vehicles are desired to have high acceleration performance. To improve the acceleration performance of a hybrid electric vehicle, there is room for improvement in the layout of multiple devices mounted on the hybrid electric vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a hybrid electric vehicle includes an engine, a transaxle, a propeller shaft, a compressor, a driver's seat, and a passenger seat. The transaxle includes a motor-generator configured to assist a rotation output of the engine, and a speed change mechanism configured to transmit the rotation output of the engine to a rear wheel. The propeller shaft is configured to transmit the rotation output of the engine to the transaxle. The compressor is configured to compress a refrigerant gas used for regulating a temperature in a passenger compartment. The speed change mechanism is connected to the engine via the propeller shaft. The motor-generator is connected to the propeller shaft at a position between the engine and the speed change mechanism in a vehicle longitudinal direction. The engine is disposed forward of the driver's seat and the passenger seat. The transaxle is disposed rearward of the driver's seat and the passenger seat. The propeller shaft extends between the driver's seat and the passenger seat and connects the engine to the transaxle. The compressor is adjacent to the transaxle.

Other features and aspects will be apparent from the following detailed description, the drawings, and the claims.

### BRIEF DESCRIPTION OF THE DRAWINGS

Fig. 1 is a schematic diagram of an arrangement of a propeller shaft and devices around the propeller shaft when a hybrid electric vehicle according to an embodiment is viewed from above.
Fig. 2 is a schematic diagram showing an arrangement of the propeller shaft and multiple devices around the propeller shaft when the hybrid electric vehicle of Fig. 1 is viewed from the side.
Fig. 3 is a schematic diagram showing the transaxle shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

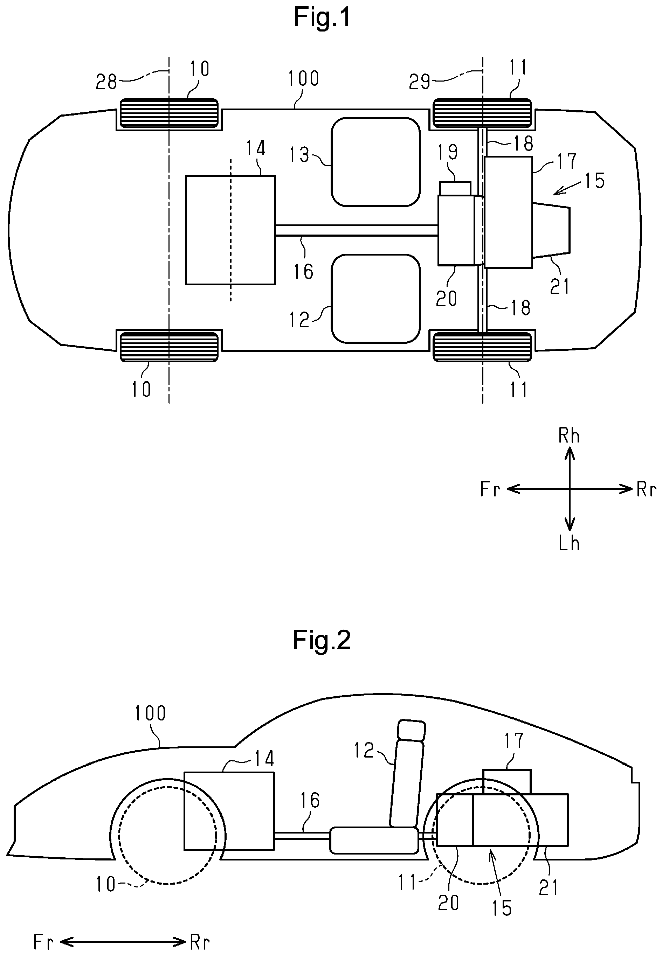

A hybrid electric vehicle 100 according to an embodiment will now be described with reference to Figs. 1 to 3.

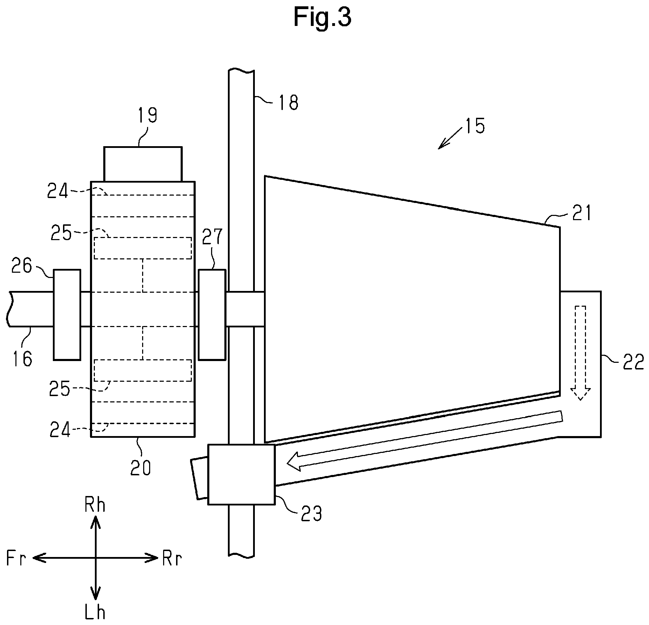

In the following description, terms related to orientations or directions, such as front, rear, upper, lower, right, and left, are defined based on the hybrid electric vehicle 100. In Figs. 1 to 3, Fr indicates the front direction of the hybrid electric vehicle 100. In Figs. 1 to 3, Rr indicates the rear direction of the hybrid electric vehicle 100. In Figs. 1 and 3, Rh indicates the right side as viewed from an occupant facing forward in the hybrid electric vehicle 100. In Figs. 1 and 3, Lh indicates the left side as viewed from an occupant facing forward in the hybrid electric vehicle 100.

Arrangement of an Engine 14, a Transaxle 15 and a Propeller Shaft 16

Fig. 1 shows an arrangement of the propeller shaft 16 and devices around the propeller shaft 16 when the hybrid electric vehicle 100 is viewed from above. Fig. 2 shows the arrangement of the propeller shaft 16 and the devices around the propeller shaft 16 when the hybrid electric vehicle 100 in Fig. 1 is viewed from the left side.

The hybrid electric vehicle 100 includes the engine 14. As shown in Figs. 1 and 2, the engine 14 is disposed forward of a driver's seat 12 and a passenger seat 13.

The hybrid electric vehicle 100 includes a transaxle 15. As shown in Figs. 1 and 2, the transaxle 15 is disposed rearward of the driver's seat 12 and the passenger seat 13.

The hybrid electric vehicle 100 includes a propeller shaft 16. As shown in Figs. 1 and 2, the propeller shaft 16 extends between the driver's seat 12 and the passenger seat 13, and connects the engine 14 to the transaxle 15. The propeller shaft 16 transmits rotation output of the engine 14 to the transaxle 15.

### Configuration of the Transaxle 15

Fig. 3 shows a structure of the transaxle 15 when the hybrid electric vehicle 100 is viewed from above. As shown in Fig. 3, the transaxle 15 includes a motor-generator 20 and a speed change mechanism 21.

As described with reference to Figs. 1 and 2, the propeller shaft 16 connects the engine 14 to the transaxle 15. The speed change mechanism 21 is connected to the engine 14 via the propeller shaft 16.

The speed change mechanism 21 changes the speed of the rotation of the engine 14 transmitted through the propeller shaft 16. For example, the speed change mechanism 21 includes multiple planetary gear mechanisms that define multiple gear stages having different gear ratios. The speed change mechanism 21 is capable of changing the gear ratio by switching the gear stages.

The manner in which the speed change mechanism 21 changes the speed of the rotation from the propeller shaft 16 is not limited to the manner described above. For example, the speed change mechanism 21 may include two conical pulleys and a belt looped over the pulleys. The speed change mechanism 21 changes the speed of the rotation from the propeller shaft 16 by using the difference in circumferential length between the two pulleys. The speed change mechanism 21 can change the gear ratio by changing the effective radius of each pulley where the belt is looped.

As shown in Fig. 3, the speed change mechanism 21 is connected to a transmission mechanism 22. The transmission mechanism 22 transmits the rotation transmitted from the speed change mechanism 21 to a differential gear 23.

The transmission mechanism 22 transmits rotation from the speed change mechanism 21 in the direction of arrows in Fig. 3. For example, the transmission mechanism 22 is provided with multiple gears along the dashed arrow in Fig. 3 so that the rotation is transmitted in the direction of the dashed arrow. In the transmission mechanism 22, for example, a shaft or multiple gears are installed along the solid arrow in Fig. 3, so that the rotation transmitted in the direction of the dashed arrow is transmitted in the direction of the solid arrow.

As shown in Fig. 3, the differential gear 23 is connected to drive shafts 18. As shown in Fig. 1, the drive shafts 18 are respectively connected to right and left rear wheels 11. The differential gear 23 transmits the rotation transmitted from the transmission mechanism 22 to the right and left rear wheels 11 through the drive shafts 18. The differential gear 23 distributes the rotation transmitted to the right and left rear wheels 11 in accordance with the movement of the hybrid electric vehicle 100.

As described above, the rotation output of the engine 14 is transmitted to the rear wheels 11 through the speed change mechanism 21, the transmission mechanism 22, the differential gear 23, and the drive shafts 18. The speed change mechanism 21 changes the speed of the rotation output of the engine 14 and transmits the rotation to the rear wheels 11.

In the motor-generator 20 shown in Fig. 3, sections indicated by dashed lines represent the internal structure of the motor-generator 20. As shown in Fig. 3, the motor-generator 20 includes a rotor 25 having magnets. As shown in Fig. 3, the motor-generator 20 includes a stator 24 disposed so as to surround the rotor 25. The rotor 25 is connected to the propeller shaft 16.

The motor-generator 20 assists the rotation output of the engine 14. The motor-generator 20 rotates the rotor 25 together with the propeller shaft 16 by supplying electricity to the stator 24. When the rotor 25 rotates together with the propeller shaft 16, rotation output of the engine 14 transmitted to the speed change mechanism 21 through the propeller shaft 16 is increased.

The motor-generator 20 is also capable of generating power by using the rotation output of the engine 14. The motor-generator 20 is capable of generating power when the rotor 25 rotates as the propeller shaft 16 is rotated by the engine 14.

As shown in Fig. 3, the motor-generator 20 is connected to the propeller shaft 16 at a position forward of the speed change mechanism 21. As shown in Figs. 1 and 2, the motor-generator 20 is disposed between the engine 14 and the speed change mechanism 21 in the vehicle longitudinal direction. Specifically, the motor-generator 20 is connected to the propeller shaft 16 at a position between the engine 14 and the speed change mechanism 21 in the vehicle longitudinal direction.

As shown in Fig. 3, a first clutch 26 is provided in a portion of the propeller shaft 16 between the engine 14 and the motor-generator 20. The first clutch 26 is capable of selectively connecting or disconnecting the portion of the propeller shaft 16 between the engine 14 and the motor-generator 20. When the first clutch 26 disconnects the engine 14 from the motor-generator 20, the rotation of the rotor 25 by the motor-generator 20 allows the rear wheels 11 to be driven by the driving force of the motor-generator 20 independently of the operation of the engine 14.

As shown in Fig. 3, a second clutch 27 is provided in a portion of the propeller shaft 16 between the motor-generator 20 and the speed change mechanism 21. The second clutch 27 is capable of selectively connecting or disconnecting the portion of the propeller shaft 16 between the motor-generator 20 and the speed change mechanism 21.

### Arrangement of Compressor 19 and Main Battery 17

The hybrid electric vehicle 100 includes the compressor 19. In the hybrid electric vehicle 100, the compressor 19 compresses refrigerant gas used for regulating the temperature in the passenger compartment.

As shown in Figs. 1 and 3, the compressor 19 is disposed adjacent to the transaxle 15. The compressor 19 is disposed adjacent to the motor-generator 20 in the transaxle 15. Specifically, the compressor 19 is disposed to a side of the motor-generator 20 in the vehicle width direction. The compressor 19 is disposed to the right of the motor-generator 20. The compressor 19 may be disposed to the left of the motor-generator 20.

The hybrid electric vehicle 100 includes the main battery 17. As shown in Fig. 2, the main battery 17 is disposed above the transaxle 15.

The main battery 17 stores electricity. For example, the main battery 17 stores electricity generated by the motor-generator 20. The main battery 17 supplies the stored electricity to the motor-generator 20. The motor-generator 20 rotates the rotor 25 by supplying electricity supplied from the main battery 17 to the stator 24.

### Arrangement of Devices in Relation to the Rotation Axes of Front Wheels 10 and the Rear Wheels 11

In Fig. 1, the long-dash short-dash line through the front wheels 10 represents a front wheel rotation axis 28. The front wheel rotation axis 28 is a rotation axis of the front wheels 10.

In Fig. 1, the dashed line through in the engine 14 represents the position of the center of gravity of the engine 14 in the vehicle longitudinal direction. As shown in Fig. 1, the dashed line is located rearward of the front wheel rotation axis 28. The engine 14 is disposed such that the center of gravity of the engine 14 is located rearward of the rotation axis of the front wheels 10.

In Fig. 1, the long-dash short-dash line through the rear wheels 11 represents a rear wheel rotation axis 29. The rear wheel rotation axis 29 is a rotation axis of the rear wheels 11.

As shown in Fig. 1, the motor-generator 20 is disposed forward of the rear wheel rotation axis 29. The compressor 19, which is disposed to the side of the motor-generator 20 in the vehicle width direction, is disposed forward of the rear wheel rotation axis 29.

The center of gravity of the engine 14, the compressor 19, and the motor-generator 20 are collectively disposed between the front wheel rotation axis 28 and the rear wheel rotation axis 29.

### Operation of the Present Embodiment

In a rear-wheel drive vehicle, traction is readily achieved when a heavy object exists in the rear portion of the vehicle. The transaxle 15 and the compressor 19 are heavy objects. Since the transaxle 15 and the compressor 19 are disposed in the rear portion of the hybrid electric vehicle 100, the weight of the rear portion of the hybrid electric vehicle 100 is increased.

### Advantages of the Present Embodiment

(1) The hybrid electric vehicle 100 achieves high acceleration performance.
(2) The hybrid electric vehicle 100 includes the main battery 17, which stores electricity and supplies the stored electricity to the motor-generator 20. The main battery 17 is disposed above the transaxle 15.

The main battery 17 is a heavy object similarly to the transaxle 15 and the compressor 19. The main battery 17 further increases the weight of the rear portion of the hybrid electric vehicle 100. This configuration allows the hybrid electric vehicle 100 to achieve higher acceleration performance.

(3) The compressor 19 is adjacent to the motor-generator 20.

The closer a heavy object is positioned to the passenger compartment, the better the handling characteristics become. The compressor 19, which is a heavy object, is disposed adjacent to the motor-generator 20, which is positioned close to the passenger compartment in the transaxle 15. This configuration improves the handling characteristics of the hybrid electric vehicle 100.

(4) The compressor 19 is disposed to the side of the motor-generator 20 in the vehicle width direction.

(5) The motor-generator 20 is disposed forward of the rotation axis of the rear wheels 11. The engine 14 is disposed such that the center of gravity of the engine 14 is located rearward of the rotation axis of the front wheels 10.

Since the motor-generator 20 is disposed forward of the rear wheel rotation axis 29, the compressor 19 is also disposed forward of the rear wheel rotation axis 29. By optimizing the position of the motor-generator 20, the position of the compressor 19 is brought closer to the passenger compartment.

The engine 14 is a heavy object like the compressor 19. The center of gravity of the engine 14 is located closer to the passenger compartment than the rotation axis of the front wheels 10 is.

The compressor 19 and the engine 14, which are heavy objects, are collectively disposed near the passenger compartment, which is located between the front wheels 10 and the rear wheels 11. This configuration improves the handling characteristics of the hybrid electric vehicle 100.

### Modifications

The above-described embodiment may be modified as follows. The above-described embodiment and the following modifications can be combined if the combined modifications remain technically consistent with each other.

In the hybrid electric vehicle 100, as shown in Fig. 1, the driver's seat 12 is disposed on the left side in Fig. 1, and the passenger seat 13 is disposed on the right side in Fig. 1. The arrangement of the driver's seat 12 and the passenger seat 13 may be reversed.

As described with reference to Fig. 3, the rotation output of the engine 14 is transmitted through the speed change mechanism 21, the transmission mechanism 22, the differential gear 23, and the drive shafts 18, in that order to the rear wheels 11. The manner in which the rotation output of the engine 14 is transmitted to the rear wheels 11 is not limited to the above-described embodiment. For example, when the drive shafts 18 are disposed rearward of the speed change mechanism 21, the hybrid electric vehicle 100 does not necessarily need to include the transmission mechanism 22.

The above-described hybrid electric vehicle 100 includes the first clutch 26 and the second clutch 27. The hybrid electric vehicle 100 may be configured without either the first clutch 26, the second clutch 27, or both.

The above-described hybrid electric vehicle 100 includes the main battery 17. The hybrid electric vehicle 100 does not necessarily need to include the main battery 17.

In the above-described hybrid electric vehicle 100, the main battery 17 is disposed above the transaxle 15. The position of the main battery 17 is not limited to the above-described embodiment. The main battery 17 may be disposed, for example, below the transaxle 15. The main battery 17 may be disposed, for example, forward of the driver's seat 12 and the passenger seat 13.

The compressor 19 is adjacent to the motor-generator 20. The compressor 19 is disposed to a side of the motor-generator 20 in the vehicle width direction. The position at which the compressor 19 is disposed is not limited to the above-described embodiment.

The compressor 19 may be disposed adjacent to, for example, the speed change mechanism 21 instead of the motor-generator 20. The compressor 19 may be disposed, for example, above and adjacent to the motor-generator 20. The compressor 19 may be disposed, for example, below and adjacent to the motor-generator 20.

The motor-generator 20 is disposed forward of the rear wheel rotation axis 29. The motor-generator 20 does not necessarily need to be disposed forward of the rear wheel rotation axis 29. The motor-generator 20 may be disposed, for example, rearward of the rear wheel rotation axis 29.

The engine 14 is disposed such that the center of gravity of the engine 14 is located rearward of the front wheel rotation axis 28. The position at which the engine 14 is disposed is not limited to the above-described embodiment. The engine 14 may be disposed such that the center of gravity of the engine 14 is located, for example, forward of the front wheel rotation axis 28.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A hybrid electric vehicle (100), comprising:
an engine (14);
a transaxle (15) including:
a motor-generator (20) configured to assist a rotation output of the engine (14); and
a speed change mechanism (21) configured to transmit the rotation output of the engine (14) to a rear wheel (11);
a propeller shaft (16) configured to transmit the rotation output of the engine (14) to the transaxle (15);
a compressor (19) configured to compress a refrigerant gas used for regulating a temperature in a passenger compartment; and
a driver's seat (12) and a passenger seat (13), wherein
the speed change mechanism (21) is connected to the engine (14) via the propeller shaft (16),
the motor-generator (20) is connected to the propeller (16) shaft at a position between the engine (14) and the speed change mechanism (21) in a vehicle longitudinal direction,
the engine (14) is disposed forward of the driver's seat (12) and the passenger seat (13),
the transaxle (15) is disposed rearward of the driver's seat (12) and the passenger seat (13),
the propeller shaft (16) extends between the driver's seat (12) and the passenger seat (13) and connects the engine (14) to the transaxle (15), and
the compressor (19) is adjacent to the transaxle (15).

2. The hybrid electric vehicle (100) according to claim 1, further comprising a main battery (17) configured to store electricity and supply the stored electricity to the motor-generator (20),
wherein the main battery (17) is disposed above the transaxle (15).

3. The hybrid electric vehicle (100) according to claim 1 or 2, wherein the compressor (19) is adjacent to the motor-generator (20).

4. The hybrid electric vehicle (100) according to claim 3, wherein the compressor (19) is disposed to a side of the motor-generator (20) in a vehicle width direction.

5. The hybrid electric vehicle (100) according to claim 3 or 4, wherein the motor-generator (20) is disposed forward of a rotation axis of the rear wheel (11), and
the engine (14) is disposed such that a center of gravity of the engine (14) is located rearward of a rotation axis of a front wheel (10).
